**Europäisches Patentamt**

**European Patent Office**

**Office européen des brevets**

(11) Veröffentlichungsnummer : **0 143 975**
**B1**

(12) **EUROPÄISCHE PATENTSCHRIFT**

(45) Veröffentlichungstag der Patentschrift :
19.08.87

(21) Anmeldenummer : **84112861.4**

(22) Anmeldetag : **25.10.84**

(51) Int. Cl.⁴ : **B 60 K 17/34**, B 60 K 23/04,
B 60 K 17/20

(54) Ackerschlepper mit zwei antreibbaren, Differentialgetriebe aufweisenden Achsen.

(30) Priorität : 27.10.83 DE 3338940

(43) Veröffentlichungstag der Anmeldung :
12.06.85 Patentblatt 85/24

(45) Bekanntmachung des Hinweises auf die Patenterteilung : 19.08.87 Patentblatt 87/34

(84) Benannte Vertragsstaaten :
DE FR GB IT

(56) Entgegenhaltungen :
EP-A- 0 118 155
US-A- 4 162 712

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Blom, Christian, Dipl.-Kfm**
**An der Ringmauer 14**
**D-5063 Overath (DE)**

Jouve, 18, rue St-Denis, 75001 Paris, France

**Beschreibung**

Die Erfindung bezieht sich auf einem Ackerschlepper mit zwei antreibbaren, Differentialgetriebe aufweisenden Achsen, wobei im Differentialkorb der Vorderachse Kuppelglieder angeordnet sind, an die bei Geradeausfahrt des Ackerschleppers jede der Vorderachshälften mittels Kupplungsräder kraft- oder reibschlüssig ankuppelbar ist, während aufgrund einer Drehzahldifferenz zwischen den Achshälften jeweils das Kupplungsrad der schneller drehenden Achshälfte selbsttätig von den Kuppelgliedern abkuppelbar ist.

Bei einem bekannten Differentialgetriebe der im Oberbegriff des Anspruchs 1 aufgeführten Gattung (DE-C-307 351) sind die Achshälften einer angetriebenen Hinterachse bei normaler Geradeausfahrt über Kuppelglieder und Kupplungsräder drehfest aneinander gekuppelt, während bei einer Kurvenfahrt, bei der eine Drehzahldifferenz zwischen kurveninnerem und kurvenäußerem Rad auftritt, das dem kurvenäußeren Rad zugeordnete Kupplungsrad mit den Kuppelgliedern nach der Art eines Freilaufs zusammenwirkt. Dadurch kann sich das kurvenäußere Rad schneller drehen. Bei Ackerschleppern finden derartige Differentialgetriebe Anwendung an angetriebenen Vorderachsen. Das Hinterachsdifferential von Ackerschleppern ist dagegen zumeist mit einer Differentialsperre ausgerüstet, die als nur im Stillstand des Fahrzeugs schaltbare Klauenkupplung ausgebildet ist. Dabei erfolgt die Betätigung dieser Klauenkupplung mittels eines Schalthebels vom Fahrerstand des Ackerschleppers aus. Es bleibt folglich der Aufmerksamkeit des Fahrers überlassen, einseitigen Schlupf der aufgrund unterschiedlicher Haftverhältnisse an den Hinterrädern auftritt und zu einer Drehzahlerhöhung am rutschenden und einer Drehzahlverminderung am greifenden Rad führt, optisch zu registrieren, den Kraftfluß des Getriebes zu unterbrechen und die Klauenkupplung an dem Differential der Hinterachse in Eingriff zu bringen. Es wird daher vorausgesetzt, daß bereits einseitiger Schlupf aufgetreten ist, bevor Maßnahmen dagegen ergriffen werden. Das durchrutschende Rad hinterläßt Spuren auf dem Acker, in denen die Bodenstruktur beschädigt ist.

Die der Erfindung zugrundeliegende Aufgabe besteht somit darin, die vorstehend beschriebenen Schwierigkeiten zu vermeiden und somit eine kostenmäßig günstige Schalteinrichtung zu schaffen, die ohne Überwachung durch den Fahrer selbsttätig die Differentialsperre des Hinterachsdifferentials verstellt.

Diese Aufgabe wird an einem Ackerschlepper der in Rede stehenden Gattung durch die im Kennzeichen des Anspruchs 1 aufgeführten Merkmale gelöst.

Durch die Anordnung von Geberelementen am Differentialkorb der Vorderachse kann nach der Erfindung die Stellung der Kupplungsräder — d. h. die Einrück- oder Ausrückstellung an den Kuppelgliedern überwacht werden. Die Hinterachse weist in ihrem Differentialgetriebe eine reibschlüssig wirkende Differentialsperre auf, die im Normalbetrieb des Ackerschleppers die Halbachsen drehfest miteinander verbindet. Tritt an der Vorderachse zwischen den Rädern eine Drehzahldifferenz bei einer Kurvenfahrt des Ackerschleppers auf, so wird, wie bereits erwähnt, das jeweils schneller drehende Rad vom Antrieb abgekuppelt, wodurch über das dem jeweiligen Kupplungsrad zugeordnete Geberelement einem Steuerelement ein Signal zugeführt wird, das zu einer Entsperrung der Hinterachsdifferentialsperre mittels eines Betätigungselementes führt. Die Achslastverteilung am Ackerschlepper muß zweckmäßiger Weise hierbei so gewählt sein, daß aufgrund eines ausreichendes Bodendruckes an der Vorderachse dem Ackerschlepper eine Kurvenfahrt trotz gesperrter Hinterachse aufgezwungen wird, wobei zu berücksichtigen ist, daß bei der für derartige Fahrzustände ausschlaggebenden Fahrt auf dem Acker geringfügiger einseitiger Schlupf an den Hinterrädern auftreten kann, der eine Kurvenfahrt zuläßt. Selbstverständlich muß das Kuppel- und Gebersystem an der Vorderachse auch mit einer Empfindlichkeit ausgelegt sein, die zu einem raschen Entkuppeln des Hinterachsdifferentials führt.

Weitere vorteilhafte Ausgestaltungsbeispiele sind in den Unteransprüchen beschrieben. Danach soll die Differentialsperre der Hinterachse als zwischen dem Differentialkorb und einer Achshälften angeordnete Lamellenkupplung ausgebildet sein, die gegen Federkraft in ihre Auskupplungsstellung öldruckbetätigbar ist. Zur Steuerung der Lamellenkupplung dient in vorteilhafter Weise ein elektromagnetisch betätigtes Wegeventil, dessen Masseanschluß mit einem ersten, zwischen einem ortsfesten Widerlager und dem Differentialkorb der Vorderachse angeordneten Schleifringpaar verbunden ist, von dem aus innerhalb des Differentialkorbes jeweils eine Steuerleitung zu einer Anlaufscheibe führt, die mit axialem Abstand zu dem jeweiligen Kupplungsrad angeordnet ist.

Danach liegt der Steuermagnet des Wegeventils ständig an einem stromführenden Kabel an, während der Masseanschluß im Normalbetrieb des Ackerschleppers, d. h. Geradeausfahrt, unterbrochen ist. Wird eines der Kuppelräder von den Kuppelgliedern des Differentialkorbs entkuppelt, so wird der Masseanschluß des Steuermagneten hergestellt und das Wegeventil in seine Arbeitsstellung bewegt. Die erforderlichen Schleifringpaare lassen sich ohne großen Kostenaufwand im und am Differentialkorb anbringen. Es besteht darüberhinaus aber auch die Möglichkeit mit Hilfe von kontaktlosen Gebereinrichtungen eine Steuerung des Wegeventils herbeizuführen. Zur Funktionsüberprüfung der Steuereinrichtung kann weiterhin in der Kabine des Ackerschleppers ein Instrument angeordnet sein, das dem Fahrer signalisiert, ob sich die Differentialsperren in der ein- oder ausgekuppelten Stellung befinden. Weiterhin kann die Hinterachsdifferentialsperre bzw. deren Betätigungseinrichtung mit einer Übersteuerungseinrichtung ausgerüstet sein, mittels welcher vom Fahrer vor Antritt einer Straßenfahrt die Hinterachsdifferentialsperre in die entkuppelte Stellung gebracht werden kann, in der sie während der Straßenfahrt verbleibt. Das entsprechende Schaltelement kann aber auch direkt vom Getriebe aus betätigt werden, so daß bei einem Zahnräderwechselgetriebe in Gruppenbauweise die Hinterachsdifferentialsperre in der Straßengruppe generell entsperrt ist ; auch kann das Schaltelement Tachogenerator gesteuert werden, so daß die Hinterachsedifferentialsperre nur unterhalb einer bestimmten Geschwindigkeit kuppelbar ist.

Weiterhin soll die Lenkeinrichtung des Ackerschleppers mit einer Gebereinheit verbunden sein. Die Gebereinheit steuert das Wegeventil derart, daß bei Überschreitung eines vorgegebenen Lenkwinkels die Differentialsperre an der Hinterachse gelöst wird. Eine derartige zusätzliche Steuerung ist vorgesehen, damit bei an den Vorderrädern während einer Kurvenfahrt auftretenden Schlupf und einer somit nicht eintretenden Freilaufwirkung trotzdem die Hinterachsdifferentialsperre entsperrt wird.

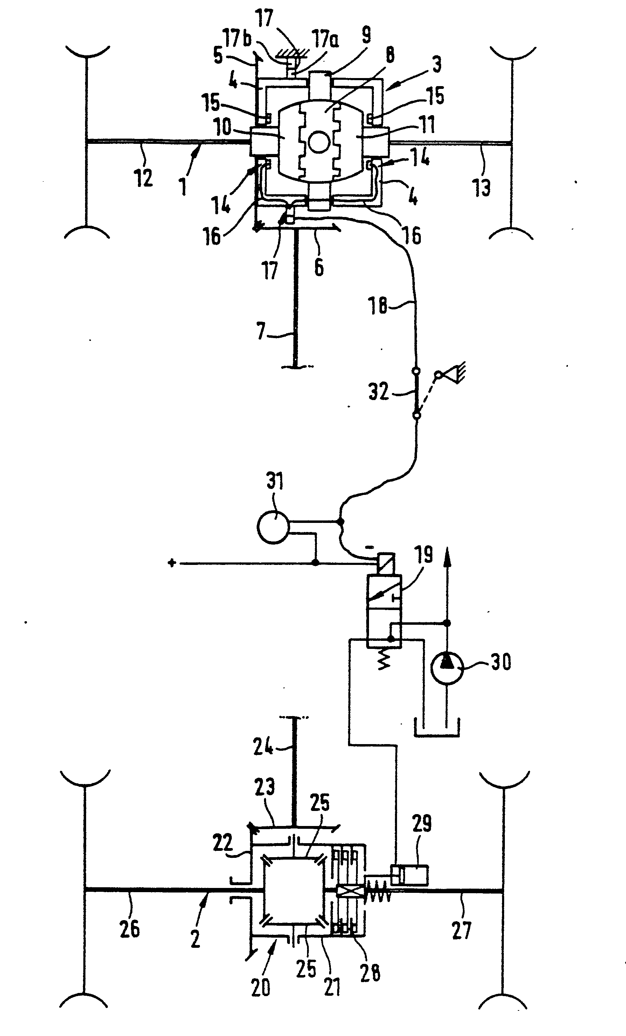

Zur weiteren Erläuterung der Erfindung wird auf die Zeichnung verwiesen, in der ein Ausführungsbeispiel vereinfacht dargestellt ist.

In der Figur sind mit 1 eine Vorderachse und mit 2 eine Hinterachse eines Ackerschleppers schematisch dargestellt. Die Vorderachse 1 weist ein Differentialgetriebe 3 auf, dessen Differentialkorb 4 über ein Tellerrad 5 von einem Kegelrad 6 einer Antriebswelle 7 antreibbar ist. Mit dem Differentialkorb 4 sind Kuppelglieder 8 in Form einer Antriebsspinne drehfest über radiale Zapfen 9 mit dem Differentialkorb 4 verbunden. Beidseitig greifen in die Kuppelglieder 8 Kupplungsräder 10 und 11 ein, die mittels eines nicht näher dargestellten Keilwellenprofils auf Achshälften 12 und 13 verschiebbar gelagert und durch einen ebenfalls nicht dargestellten, innerhalb der Kuppelglieder angeordneten Nockenringes axial verlagerbar sind. Wie bereits dargelegt, wird bei Auftreten einer Differenzdrehzahl zwischen den beiden Achshälften 12 und 13 das Kupplungsrad der jeweils schneller drehenden Achshälfte über diesen Nockenring nach außen verlagert, so daß das Kupplungsrad außer Eingriff mit den Kupplungsgliedern 8 gebracht wird. Weiterhin sind im Inneren des mit 4 bezeichneten Differentialkorbes Geberelemente 14 mit axialem Abstand zu dem Kupplungsrädern 10 und 11 in Form von Anlaufringen 15 angeordnet. Über Masseleitungen 16 stehen diese Anlaufringe mit einem Schleifringpaar 17 in Verbindung, von dem ein innerer Schleifring 17a am Differentialkorb 4 und ein äußerer Schleifring 17b an einem ortsfesten Widerlager angeordnet sind. Von dem äußeren Schleifring 17b führt eine Masseleitung 18 zu einem als elektromagnetisch betätigtes Wegeventil ausgeführtem Steuerelement 19.

An der ebenfalls schematisch dargestellten Hinterachse 2 des Ackerschleppers ist ein weiteres Differentialgetriebe 20 mit einem Differentialkorb 21 vorgesehen, der mittels seines Tellerrades 22 über ein Kegelrad 23 von einer Getriebeausgangswelle 24 antreibbar ist. Innerhalb des Differentialkorbes 21 sind drehfest mit jeweiligen Achshälften 26 und 27 verbundene Ausgleichräder 25 angeordnet. Dabei ist eine der Achshälften 27 über eine reibschlüssig wirkende Differentialsperre 28, die als Lamellenkupplung ausgebildet ist, an den Differentialkorb 21 ankuppelbar. Die Betätigung der reibschlüssigen Differentialsperre 28 in die Einkuppelstellung erfolgt mittels eines Betätigungselements 29, das wiederum über das bereits erwähnte Steuerelement 19 an ein Drucköversorgungssystem einer Pumpe 30 anschließbar ist. Außerdem dient ein zwischen der gesteuerten Masseleitung 18 und einer stromführenden Klemme angeordnetes Instrument 31 zur Anzeige des jeweiligen Betriebszustandes der beiden Differentialgetriebe 3 und 20. In der Masseleitung 18 ist ein Schaltelement 32 vorgesehen, welches vom Fahrerstand des Ackerschleppers aus durch den Fahrer oder durch ein Gruppenschaltelement des Zahnräderwechselgetriebes betätigbar ist. Soll die Hinterachsdifferentialsperre 28 entsperrt werden, so wird die Masseleitung über das Schaltelement 32 an Masse gelegt.

Die Arbeitsweise der Steuereinrichtung nach dem Ausführungsbeispiel ist folgende :

Nach der Zeichnung befinden sich die Differentialgetriebe 3 und 20 der Vorder- 1 und Hinterachse 2 in einem Zustand bei Geradeausfahrt des Ackerschleppers, d. h. sie sind gesperrt. Tritt aufgrund eines Lenkeinschlages an der Vorderachse 1 eine Drehzahldifferenz zwischen kurvenäußerem und kurveninnerem Rad auf, bei der beispielsweise die Achshälfte 13 schneller dreht als die Achshälfte 12, so wird mit dem nicht dargestellten Nockenring das Kupplungsrad 11 zum Entkuppeln axial nach außen bewegt und berührt die entsprechende Anlaufscheibe, so daß die Masseleitung 16 Massekontakt erhält. Dies führt wiederum dazu, daß das Steuerelement 19 in eine Arbeitsstellung bewegt wird, so daß Drucköl aus der Pumpe 30 zum Betätigungselement 29 fließt, welches die reibschlüssige Kupplung 28 in ihre ausgekuppelte Stellung bewegt. Die Differentialsperre 28 der Hinterachse 2 befindet sich daraufhin im ungesperrten Zustand. Ist die Differenzdrehzahl an der Vorderachse aufgehoben, so rastet das Kupplungsrad 11 wieder an den Kuppelgliedern 8 ein und löst den Massekontakt, woraufhin die reibschlüssige Kupplung 28 in ihre Sperrstellung bewegt wird.

**Patentansprüche**

1. Ackerschlepper mit zwei antreibbaren, Differentialgetriebe (3, 20) aufweisenden Achsen (1, 2), wobei im Differentialkorb (4) der Vorderachse (1) Kuppelglieder angeordnet sind, an die bei Geradeausfahrt des Ackerschleppers jede der Vorderachshälften (12, 13) mittels Kupplungsräder (10, 11) kraft- oder reibschlüssig ankuppelbar ist, während aufgrund einer Drehzahldifferenz zwischen den Vorderachshälften (12, 13) jeweils das Kupplungsrad (10, 11) der schneller drehenden Vorderachshälfte (12, 13) selbsttätig von den Kuppelgliedern (8) abkuppelbar ist, dadurch gekennzeichnet, daß am Differentialkorb (4) die Stellung der Kupplungsräder (10, 11) überwachende Geberelenente (14) angeordnet sind, deren Steuersignal einem Steuerelement (19) zugeführt wird, daß im Differentialgetriebe (20) der Hinterachse (2) eine reibschlüssig wirkende Differentialsperre (28) mit einer Betätigungseinrichtung (29) vorgesehen ist und daß die Betätigungseinrichtung (29) von dem Steuerelement (19) bei Abkupplung eines der Kupplungsräder (10, 11) von den Kuppelgliedern (8) in eine Auskupplungsstellung steuerbar ist.

2. Ackerschlepper nach Anspruch 1, dadurch gekennzeichnet, daß die Differentialsperre (28) der Hinterachse (2) als zwischen dem Differentialkorb (21) und einer der Achshälften (26, 27) angeordnete Lamellenkupplung ausgebildet ist, die gegen Federkraft in ihre Auskupplungsstellung öldruckbetätigbar ist.

3. Ackerschlepper nach einem der vorhergehenden Ansprüche, dadurch gekennzeichnet, daß zur Steuerung der Lamellenkupplung (28) ein elektromagnetisch betätigtes Wegeventil (19) vorgesehen ist, dessen Masseanschluß über eine Masseleitung mit einem ersten, zwischen einem ortsfesten Widerlager und dem Differentialkorb (4) der Vorderachse (1) angeordneten Schleifringpaar (17) verbunden ist, von dem aus innerhalb des Differentialkorbs jeweils eine Steuerleitung (16) zu einem Anlaufring (15) führt, die mit axialem Abstand zu dem jeweiligen Kupplungsrad (10, 11) angeordnet sind.

4. Ackerschlepper nach einem der vorhergehenden Ansprüche, dadurch gekennzeichnet, daß das Wegeventil (19) mit einem die Ein- und/oder Auskupplungsstellung der beiden Differentialsperren (8, 10, 11 bzw. 28) anzeigenden Instrument (31) verbunden ist.

5. Ackerschlepper nach einem der vorhergehenden Ansprüche, dadurch gekennzeichnet, daß das Wegeventil (19) mit einem Schaltelement (32) verbunden ist, das manuell, tachogeneratorgesteuert oder durch Gruppenschaltelemente des Zahnräderwechselgetriebes derart betätigbar ist, daß die Hinterachsdifferentialsperre (28) ständig entsperrt ist.

6. Ackerschlepper nach einem der vorhergehenden Ansprüchen, dadurch gekennzeichnet, daß das Wegeventil (19) mit einem den Lenkwinkel an der Vorderachse (1) überwachenden Gebereinheit verbunden ist, mittels welcher bei Überschreitung eines vorgegebenen Lenkwinkels die Hinterachsdifferentialsperre (28) in eine entsperrte Stellung steuerbar ist.

**Claims**

1. A tractor having two driving axles (1, 2) each including a differential gear (3, 20), in which coupling members are arranged in the differential cage (4) of the front axle (1), in which, if the tractor travels straight ahead, each of the front axle's half shafts (12, 13) is lockingly or frictionally engageable — by means of coupling wheels (10, 11) — with the coupling members whereas, if there is a speed difference between the front axle's half shafts (12, 13), the coupling wheel (10, 11) of the half shaft (12, 13) which at that time rotates at the higher speed is automatically disengageable from the coupling members (8), characterized in that transducers (14) monitoring the position of each of the coupling wheels (10, 11) are arranged on the differential cage (4), that the signals of the transducers are transmitted to a control element (19), that the differential gear (20) of the rear axle (2) is provided with a frictionally operable differential blocking device (28) including an actuator (29), and in that, if one of the coupling wheels (10, 17) is disengaged from the coupling members (8), the actuator (29) is directable by the control element (19) to move the blocking device (28) into its unblocking position.

2. A tractor according to claim 1, characterized in that the differential blocking device (28) of the rear axle (2) is constructed as a disc clutch, is arranged between the differential cage (21) and one of the half shafts (26, 27) and is movable by oil pressure against the bias of a spring into its declutching position.

3. A tractor according to claim 1 or claim 2, characterized in that the control element (19) for controlling the disc clutch (28) is an electromagnetically actuated distributor valve the negative earth terminal of which is connected by an earth wire to a first pair of slip rings (17) arranged between a fixed support and the front axle's (1) differential cage (4), and in that said pair of slip rings is connected by respective control cables (16) located within the differential cage to a respective one of two butting rings (15) disposed in the cage axially spaced from the respective coupling wheels (10, 11).

4. A tractor according to any of the preceding claims, characterized in that the distributor valve (19) is connected to an instrument (31) indicating the engaged and/or disengaged position of the two differential blocking devices (8, 10, 11 and, respectively, 28).

5. A tractor according to any of the preceding claims, characterized in that the distributor valve (19) is connected to a switching element (32) actuatable, either manually or by the tachometer generator or by grouped shift elements of the change-gear system, in such a way that the rear axle's differential blocking device (28) is permanently unblocked.

6. A tractor according to any of the preceding claims, characterized in that the distributor valve (19) is connected to a transducer monitoring the steering angle of the front axle (1) and serving to move, if the steering angle exceeds a predetermined size, the rear axle's differential blocking device (28) into its unblocking position.

**Revendications**

1. Tracteur agricole avec deux essieux entraînables (1, 2), comportant chacun un engrenage différentiel (3, 20), des organes d'accouplement étant disposés dans le carter (4) du différentiel de l'essieu avant (1), organes auxquels peut être accouplée, de façon impérative ou bien par frottement, au moyen de roues d'accouplement (10, 11) chacune des moitiés (12, 13) de l'essieu avant lorsque le tracteur agricole se déplace en ligne droite, tandis que du fait d'une différence de vitesse de rotation entre les moitiés (12, 13) de l'essieu avant, la roue d'accouplement (10, 11) de la moitié (12, 13) de l'essieu avant tournant plus rapidement est susceptible d'être automatiquement désaccouplée des organes d'accouplement (8), tracteur agricole caractérisé en ce que des éléments indicateurs (14) surveillant la position des roues d'accouplement (10, 11) sont disposés sur le carter (4) du différentiel, éléments dont le signal de commande est appliqué à un élément de commande (19), en ce que dans l'engrenage différentiel (20) de l'essieu arrière (2) il est prévu un blocage (28) du différentiel agissant par adhérence, avec un dispositif d'actionnement (29), et en ce que le dispositif d'actionnement (29) est susceptible d'être commandé dans une position de désaccouplement par l'élément de commande (19) lors du désaccouplement entre une des roues d'accouplement (10, 11) et les organes d'accouplement (8).

2. Tracteur agricole selon la revendication 1, caractérisé en ce que le blocage (28) du différentiel de l'essieu arrière (2) est constitué par un accouplement à lamelles disposé entre le carter (21) du différentiel et une des moitiés d'essieux (25, 27), cet accouplement à lamelles étant susceptible d'être actionné par une pression d'huile, contre l'action d'un ressort dans sa position de désaccouplement.

3. Tracteur agricole selon une des précédentes revendications, caractérisé en ce que pour commander l'accouplement à lamelles (8), il est prévu un distributeur (19) actionné électromagnétiquement dont le raccordement à la masse est relié par l'intermédiaire d'un conducteur de masse à une première paire (17) de bagues à contact de glissement disposée entre un contre-appui fixe et le carter (4) du différentiel de l'essieu avant (1), paire de bagues à partir de laquelle un conducteur de commande (16) aboutit respectivement à l'intérieur du carter du différentiel à une bague de démarrage (15) disposée à une certaine distance axiale par rapport à la roue d'accouplement considérée (10, 11).

4. Tracteur agricole selon une des précédentes revendications, caractérisé en ce que le distributeur (19) est relié à un instrument (31) indiquant la position d'accouplement et/ou de désaccouplement des deux blocages de différentiel (8, 10, 11 ou bien 28).

5. Tracteur agricole selon une des précédentes revendications, caractérisé en ce que le distributeur (19) est relié à un élément de commutation (32) qui, en étant commandé manuellement, commandé par une génératrice tachymétrique ou bien par des éléments de commutation de groupes du mécanisme de changement des roues dentées, est susceptible d'être actionné de façon que le blocage (28) du différentiel de l'essieu arrière soit constamment débloqué.

6. Tracteur agricole selon une des précédentes revendications, caractérisé en ce que le distributeur (19) est relié à une unité indicatrice surveillant l'angle de déviation sur l'essieu avant (1), unité au moyen de laquelle, lors d'un dépassement d'un angle de déviation prédéfini, le blocage (28) du différentiel de l'essieu arrière est susceptible d'être commandé dans une position de déblocage.